(19) Europäisches Patentamt
European Patent Office
Office européen des brevets

(11) **EP 2 056 187 A2**

(12) **EUROPEAN PATENT APPLICATION**

(43) Date of publication:
**06.05.2009 Bulletin 2009/19**

(51) Int Cl.:
*G06F 3/044* (2006.01)     *G02F 1/1362* (2006.01)

(21) Application number: **08018983.0**

(22) Date of filing: **30.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.10.2007 US 927701**
**24.03.2008 TW 97110390**
**25.06.2008 US 145881**

(71) Applicant: **HannStar Display Corp.**
**Taipei City (TW)**

(72) Inventors:
• **Shih, Po-Sheng**
**Tao-Yuan Hsien (TW)**
• **Chen, Po-Yang**
**Tao-Yuan Hsien (TW)**
• **Pan, Hsuan-Lin**
**Tao-Yuan Hsien (TW)**
• **Yang, Kei-Hsiung**
**K.E.P.Z. (TW)**

(74) Representative: **Weber, Joachim**
**Hoefer & Partner**
**Patentanwälte**
**Pilgersheimer Strasse 20**
**81543 München (DE)**

(54) **Display device and related positioning method**

(57) A display device detects a touched position by making use of an inducing element (520) and a counter electrode (124, 390, 406, 620). The voltage produced by the counter electrode (1 24, 390, 406, 620) is able to affect a conductivity of the channel of the inducing element (520) corresponding to the touched position. The inducing element (520) and a readout circuit (118, 990) are disposed on a substrate (126, 301 , 402, 604) of the display device. The counter electrode (124, 390, 406, 620) and a shielding element (380) are both corresponded to the inducing element (520). The channel of the inducing element (520) corresponding to the touched position changes the conductivity due to the voltage produced by the corresponding counter electrode (1 24, 390, 406, 620), and an inducing signal is then generated. The inducing signal is furnished to the readout circuit (118, 990) for signal processing, and a readout signal is generated for analyzing the touched position.

FIG. 1

**Description**

The present invention relates to a display device and a related positioning method.

The capacitive touch screen normally comprises a plurality of sensing capacitors, and the touched position can be detected by analyzing the changing of capacitance of the sensing capacitor corresponding to the touched position. The conventional touch screen comprises a touch panel and a liquid crystal panel separately. The touch panel and the liquid crystal panel are fabricated individually and are assembled together to form the conventional touch screen. Consequently, the conventional touch screen has disadvantages such as greater weight, higher cost, and lower light transmittance.

This in mind, the present invention aims at providing a display device and a related positioning method that reduce weight and cost and increase light transmittance.

As will be seen more clearly from the detailed description following below, the claimed display device includes an inducing element and a counter electrode that has a gap between the inducing element and the counter electrode. The claimed positioning method for a display device includes changing a gap between the counter electrode and the inducing element that modulates a conductivity of the inducing element to a modulated conductivity of the inducing element corresponding to the position.

In the following, the invention is further illustrated by way of example, taking reference to the accompanying drawings. Thereof:

Fig. 1 is a cross-sectional diagram schematically showing an inducing unit according to a first preferred embodiment of the present invention,
Fig. 2 is a cross-sectional diagram schematically showing the deformation of the counter substrate of the inducing unit in Fig. 1 when applying an external force to the counter substrate,
Fig. 3 is a diagram schematically showing a relation between a drain current and a gap between an inducing element and a counter electrode according to the present invention,
Figs. 4 and 5 are cross-sectional diagrams schematically showing an inducing unit according to the present invention,
Fig. 6 is a cross-sectional diagram schematically showing an inducing unit according to a second preferred embodiment of the present invention,
Fig. 7 is a cross-sectional diagram schematically showing an inducing unit according to a third preferred embodiment of the present invention,
Fig. 8 is a cross-sectional diagram schematically showing an inducing unit according to a fourth embodiment of the present invention,
Fig. 9 is a circuit diagram schematically showing an array structure according to the present invention,
Fig. 10 is a layout diagram schematically showing a panel structure according to the present invention,

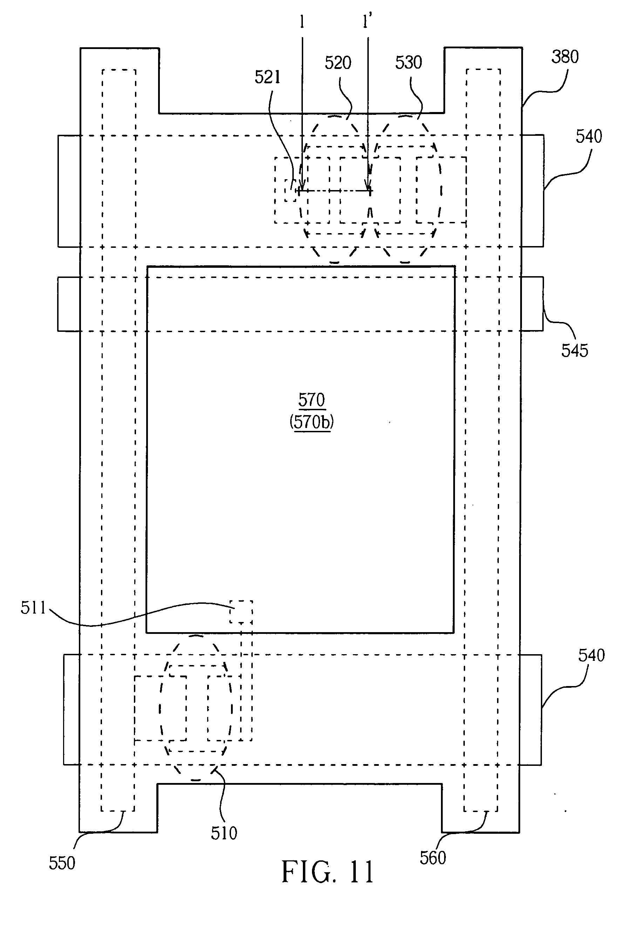

Fig. 11 is a schematic diagram showing a pixel unit according to the present invention,

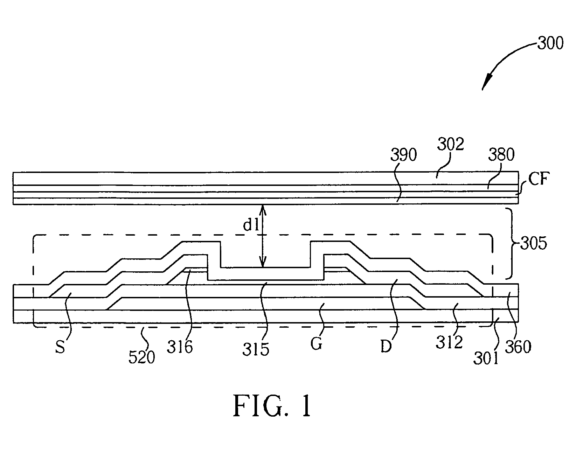

Fig. 1 2 is a circuit diagram schematically showing an inducing circuit according to the present invention,

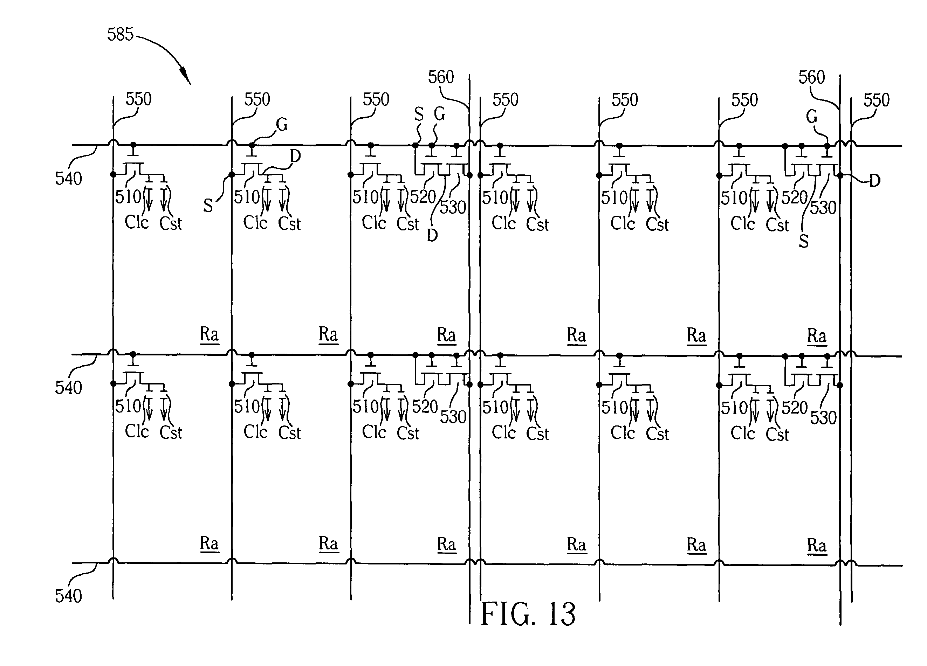

Fig. 13 is a circuit diagram schematically showing an array structure according to the present invention,

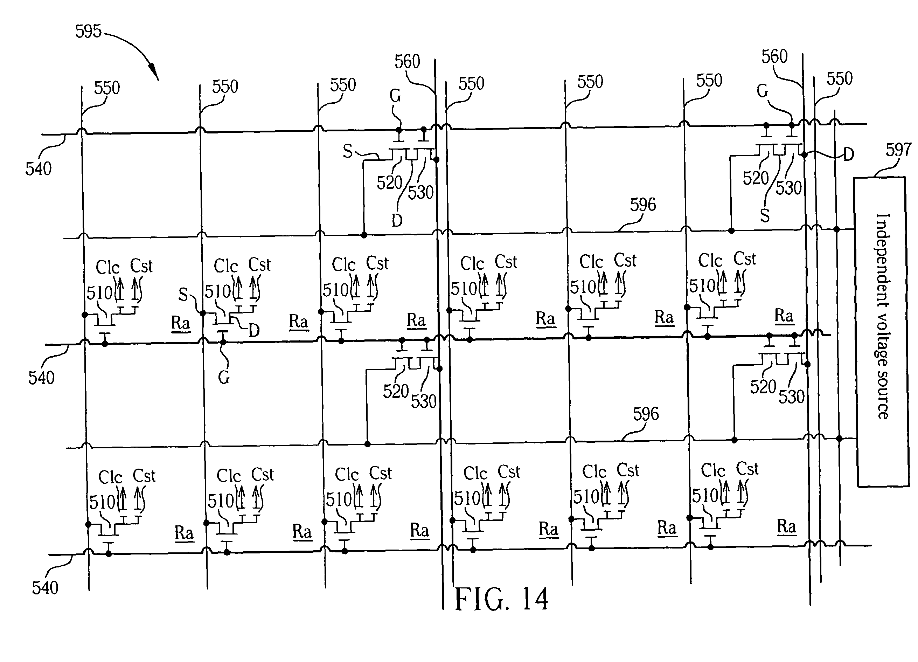

Fig. 14 is a circuit diagram schematically showing an array structure according to the present invention,

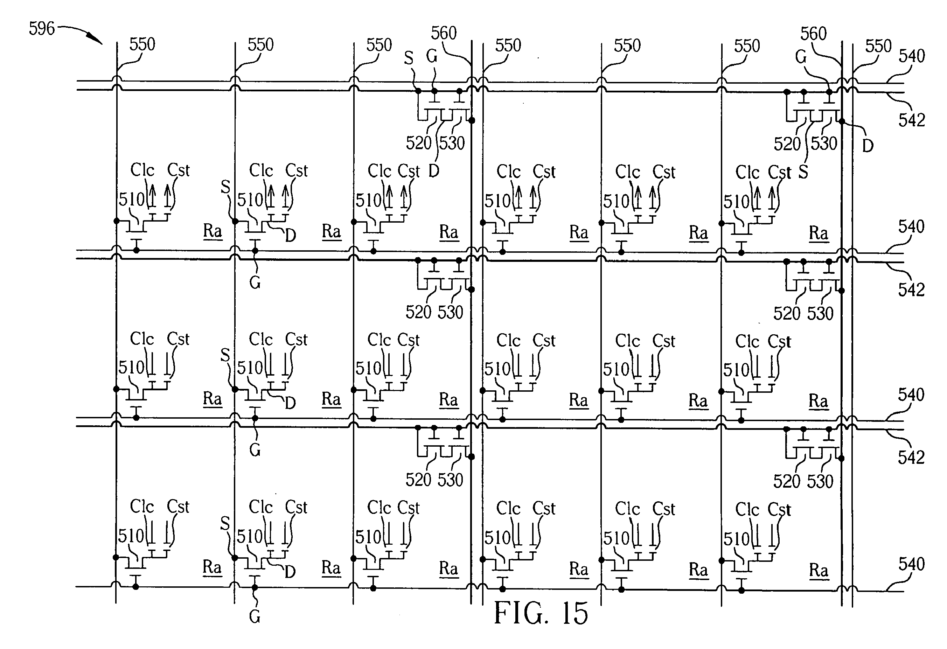

Fig. 15 is a circuit diagram schematically showing an array structure according to the present invention,

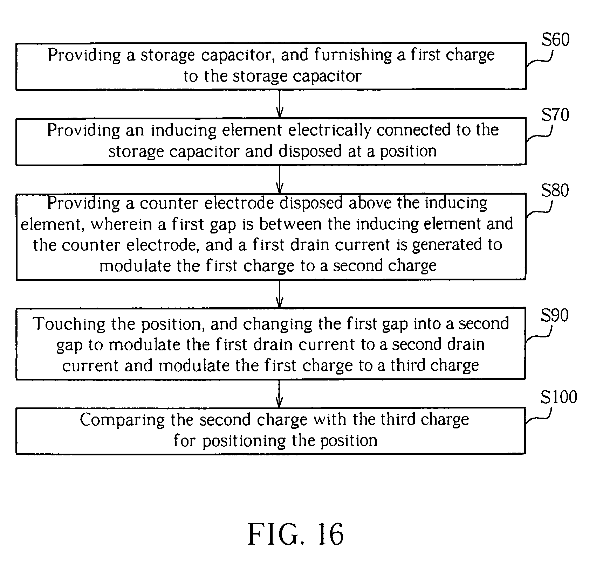

Fig. 16 is a flowchart showing a positioning method for a display device according to the present invention,
Fig. 1 7 is a circuit diagram schematically showing a pixel region of the display device according to the present invention,

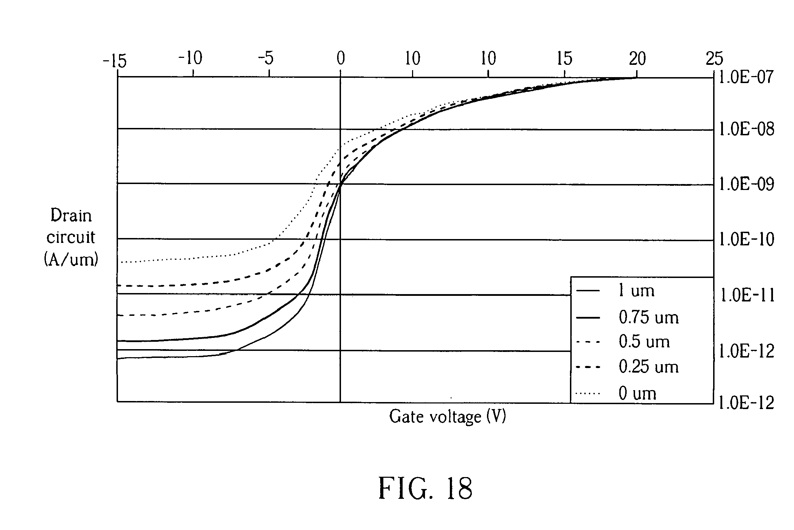

Fig. 18 is a relationship diagram illustrating the gate voltage with respect to the drain current in fixing the drain voltage of the inducing element according to the present invention, and

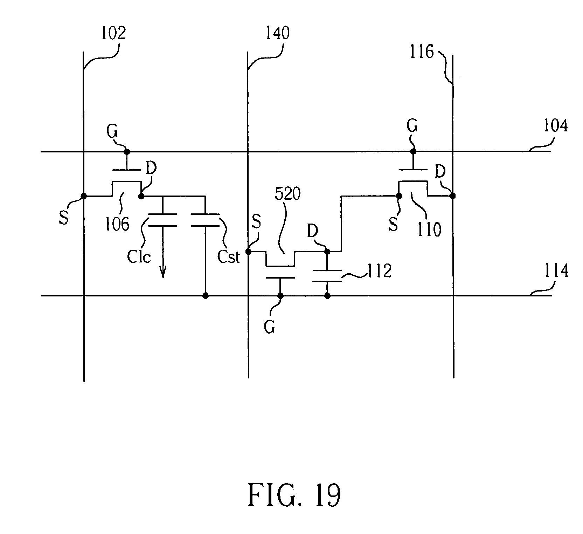

Fig. 19 is a schematic diagram illustrating a pixel region circuit of the display device according to another embodiment of the present invention.

Hereinafter, preferred embodiments of the present invention will be described in detail with reference to the accompanying drawings. Here, it is to be noted that the present invention is not limited thereto. Furthermore, the step serial numbers concerning the positioning method are not meant to limit the operating sequence, and any rearrangement of the operating sequence for achieving same functionality is still within the spirit and scope of the invention.

Please refer to Fig. 1 , which is a cross-sectional diagram schematically showing an inducing unit according to a first preferred embodiment of the present invention. The inducing unit 300 comprises an inducing element 520, a shielding element 380, a counter electrode 390, a color filter CF, and a liquid crystal layer 305. The inducing element 520 is disposed on a substrate 301. The shielding element 380, the color element CF, and the counter electrode 390 are disposed on a counter substrate 302 facing to the substrate 301. There is a gap having a first gap d1 between the counter electrode 390 and the inducing element 520. The structure of the inducing element 520 comprises a gate electrode G, a gate-insulating layer 312, a channel 31 5, a high doping region 316, a source electrode S, a drain electrode D, and a passivation layer 360. The inducing element 520 can be a PMOS transistor, an NMOS transistor, a diode, or a thin film transistor. The channel 31 5 can be an amorphous-silicon semiconductor layer. The high doping region 316 can be an amorphous-silicon semiconductor region highly doped with N-type impurity or P-type impurity. The shielding element 380 is a metal or non-metal layer having feature of light absorption or reflection.

The conductivity of the channel 315 is increasing or decreasing in response to the gate voltage of the gate electrode G and the counter voltage of the counter electrode 390. Without any external force applied to the counter substrate 302, the first gap d1 is unchanged. Therefore, the conductivity of the channel 31 5 is controlled only by the gate voltage of the gate electrode G, and is almost not affected by the counter voltage of the counter electrode 390. Meanwhile, a background signal can be generated based on the conductivity of the channel 31 5 before applying any external force to the counter substrate 302. The shielding element 380 is utilized to prevent the channel 315 from being influenced by ambient light. The shielding element 380 is an optional element and is not a must.

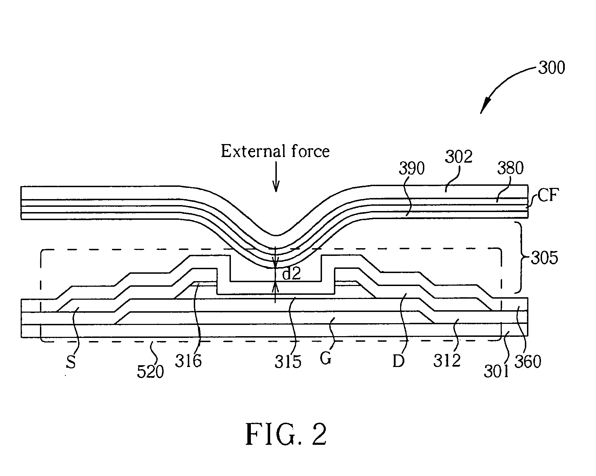

Please refer to Fig. 2, which is a cross-sectional diagram schematically showing the deformation of the counter substrate 302 of the inducing unit 300 in Fig. 1 when applying an external force to the counter substrate 302. The external force can be a pressing force applied by a finger or a touch pen in a touched position. As shown in Fig. 2, because of the external force, the gap is reduced from the first gap d1 to a second gap d2, and the influence of the counter voltage of the counter electrode 390 on the conductivity of the channel 31 5 is enhanced. In other words, the influence of the electric field produced by the counter voltage on the channel 315 is dependent on the gap, and the electric field is a function of the counter voltage, the first gap d1, and the second gap d2. That is, when the gap is reduced from the first gap d1 to a second gap d2, the intensity of the electric field will be changed and affects the conductivity of the inducing element 520. Accordingly, the inducing element 520 is able to generate an inducing signal corresponding to the conductivity of the channel 315 in response to the external force. As a result, by way of analyzing the inducing signal or comparing the inducing signal with the background signal, the touched position can be positioned.

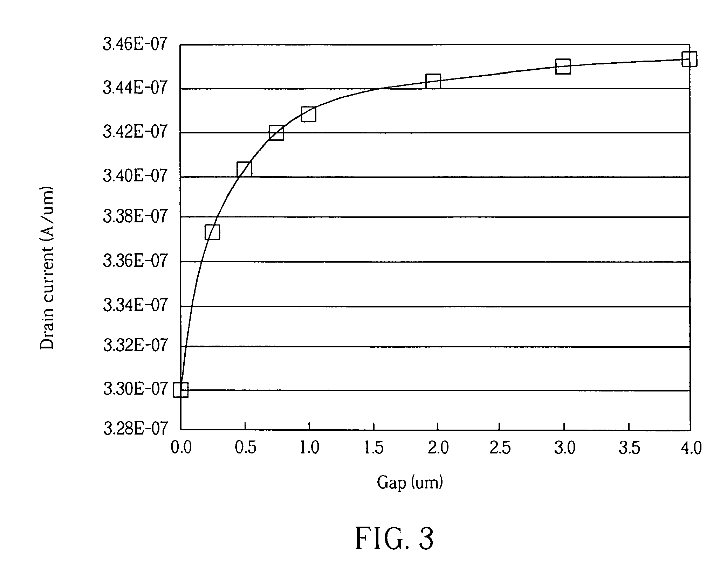

Please refer to Fig. 3, which is a diagram schematically showing a relation between a drain current and a gap between an inducing element and a counter electrode according to the present invention. As shown in Fig. 3, when a gap between the inducing element and the counter electrode is reduced, the drain current is reduced. Especially, when the gap is smaller than $2\mu$m, the drain current is obviously reduced with the change of the gap. Furthermore, when the gap is smaller than $1\mu$m, the change of the drain current due to the change of the gap is more obvious.

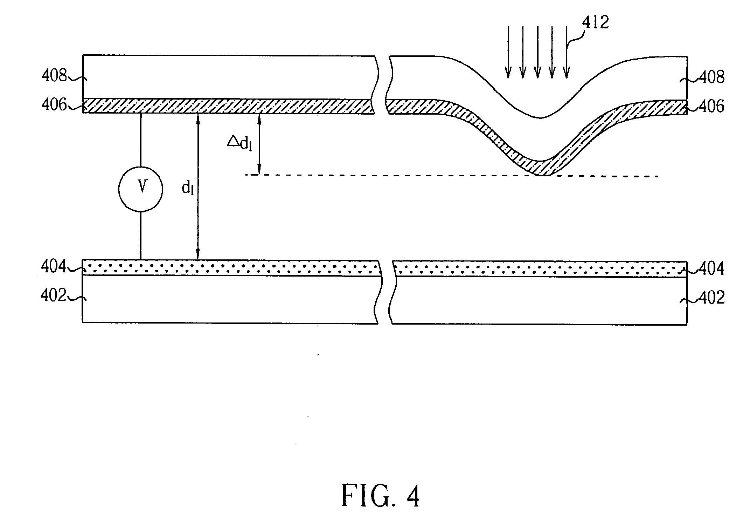

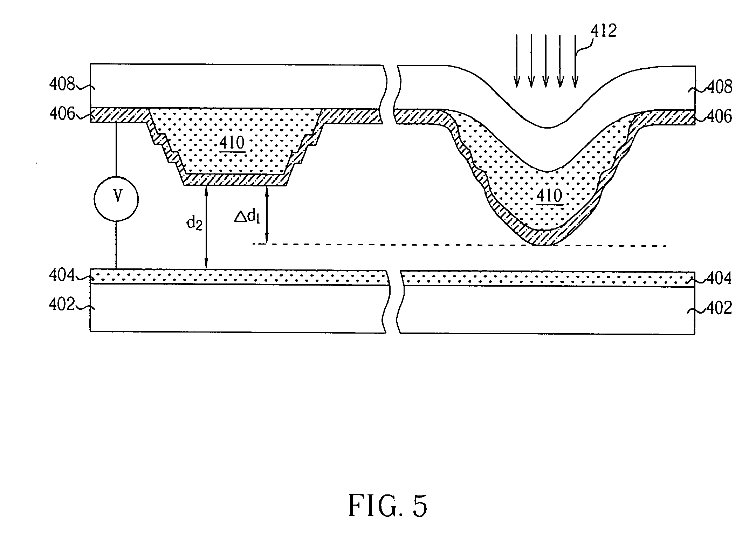

An operating method for reducing the gap between the inducing element and the counter electrode according to the present invention is further described in the following description along with Figs. 4 and 5. Figs. 4 and 5 are cross-sectional diagrams schematically showing an inducing unit according to the present invention. Please refer to Fig. 4. A gap between a passivation layer 404 on an inducing element (not shown in Fig. 4) on a substrate 402 and a counter electrode 406 on the counter substrate 408 is d1, and a voltage difference between the inducing element and the counter electrode 406 is V. At this time, an electric field applied to the inducing element is E1', and V= E1'×(d1-Δd1). When (d1-Δd1) is smaller, the electric field E1' is stronger, so that the current or the inducing signal of the inducing element is stronger. A sensitivity of the display device to the external force 41 2 can be therefore raised through reducing the gap d1. Please refer to Fig. 5. The difference of Fig. 5 from Fig. 4 only is that a protrusion 410 having a thickness t corresponding to the inducing element is formed between the counter substrate 408 and the counter electrode 406. At this time, the gap between the passivation layer 404 and the counter electrode 406 is d2, and d2=d1-t< d1. The electric field applied to the inducing element is E2, and V= E2xd2. When an external force 412 is applied to the counter substrate 408, variance of the gap between the passivation layer 404 and the counter electrode 406 is assumed Δd1. At this time, the electric field applied to the inducing element is E2', and V= E2'×(d2-Δd1). The following equation can be inferred:

$$V = E1' \times (d1 - \Delta d1) = E2' \times (d2 - \Delta d1) = E2' \times (d1 - t - \Delta d1)$$

$$E2' = E1' \times (d1 - \Delta d1) / (d1 - t - \Delta d1)$$

$$E2' > E1'$$

Therefore, the intensity of the electric field can be raised through adjusting the gap between the inducing element and the counter electrode after applying the external force. This means that the affect of the counter electrode on the current or the inducing signal of the inducing element and the sensitivity of the inducing element to the touch or the application of the external force can be increased.

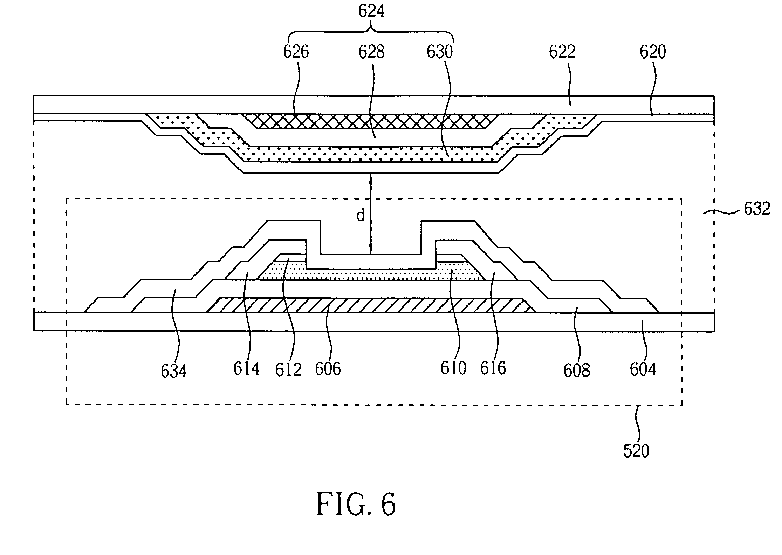

It should be noted the present invention is not limited to the abovementioned embodiment, and the gap of the present invention also can be different. Please refer to Fig. 6, which is a cross-sectional diagram schematically showing an inducing unit according to a second preferred embodiment of the present invention. An inducing element 520 is disposed on a substrate 604. The inducing element 520 includes a gate electrode 606, a gate dielectric layer 608, a source electrode 614, a drain electrode 616, an active layer 610, a high doped layer 61 2 and a passivation layer 634, wherein the active layer 610 includes a channel. The counter substrate 622 corresponds to the substrate 604, and a liquid crystal layer 632 is filled between the counter substrate 622 and the substrate 604. A protrusion 624 corresponds to the inducing element 520 and is disposed on the counter substrate 622 so as to make the counter electrode 620 disposed on the protrusion 624 be closer to the inducing element 520 disposed below the protrusion 624 and to reduce the gap d between the inducing element 520 and the counter electrode 620. For example, the gap d can be less or equal to $2\mu m$, and the gap d is preferred further less or equal to $1\mu m$. In this embodiment, the protrusion 624 can includes a photo resist material, and the photo resist material can be stacked color resist layers, such as a first color resist layer 626, a second color resist layer 628 and a third resist layer 630. The stacked color resist layer can provide light shielding or light adsorption functions, so that the manufacture for the black matrix (BM) can be omitted. In order to reach the above-mentioned light-shielding or light adsorption functions, the stacked color resist layers including any two kinds of the three colors RGB or three kinds are preferred. For example, the first resist layer 626 is red, the second resist layer 628 is green, and the third resist layer 630 is blue. In order to make the display device have good electrical performance, the protrusion 624 is preferred to be able to cover the active layer 610 of the inducing element 520. The counter electrode 620 in this embodiment also can be a common electrode, which is composed of transparent conductive materials, such as indium tin oxide (ITO).

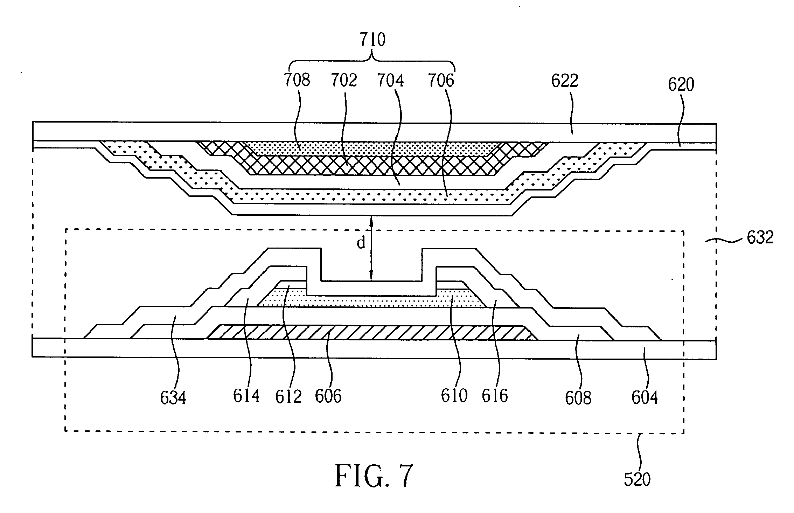

Please refer to Fig. 7, which is a cross-sectional diagram schematically showing an inducing unit according to a third preferred embodiment of the present invention. For convenience, like elements are denoted by like numerals, and like elements are not detailed redundantly. As shown in Fig. 7, the difference of this embodiment from the second preferred embodiment is the structure of the protrusion 710 of this embodiment. As shown in Fig. 7, besides the first resist layer 702, second resist layer 704 and the third resist layer 706, the protrusion 710 of this embodiment further includes a light-shielding layer 708 disposed between the stacked color resist layers and the counter substrate 622. The light-shielding layer 708 can be composed of metal or polymer material. Besides providing a light-shielding function, the light-shielding layer 708 also can contribute to heighten the counter electrode 620. In this embodiment, the light-shielding layer 708 is utilized for shielding light, so that the structure or color of the color resist layer cannot be limited to the second preferred embodiment. For example, the color resist layers can be stacked by any one kind or any two kinds of the three colors RGB.

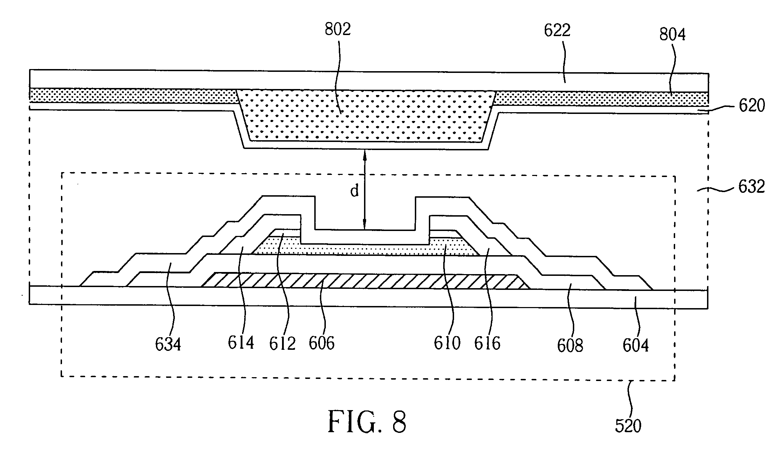

Please refer to Fig. 8, which is a cross-sectional diagram schematically showing an inducing unit according to a fourth embodiment of the present invention. The difference of this embodiment from the second preferred embodiment is the dispositions of the protrusion 802 and the light-shielding layer 804 of this embodiment. The protrusion 802 of this embodiment does not have the light-shielding layer 804 disposed thereon, and the light-shielding layer 804 is disposed outside the protrusion 802. The protrusion 802 can be composed of a transparent material, such as photo spacer. Therefore, the inducing element 520 can be affected by the light, such as light pen and environment light, to generate an inducing signal. The inducing element 520 of this embodiment can have two input types. One is touch type, and the other is light-inducing type. According to the display device of the above-mentioned embodiment of the present invention, the protrusion can heighten the counter electrode, and reduce the gap between the counter electrode and the inducing element 520. The inducing quantity of the electric field change caused by the inducing element 520 to deform the counter substrate can be increased so as to raise the inducing sensitivity.

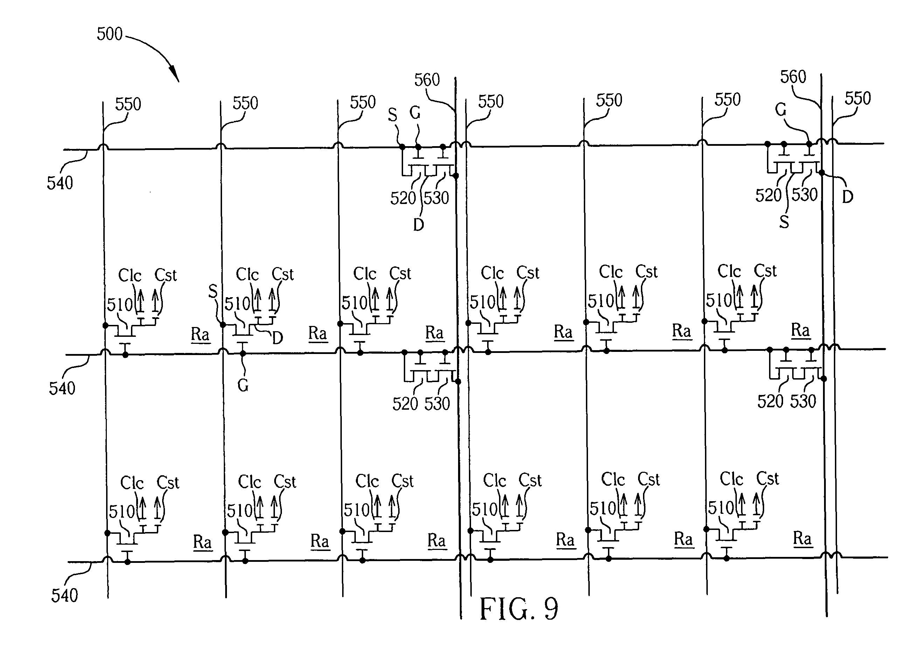

Please refer to Fig. 9, which is a circuit diagram schematically showing an array structure according to the present invention. The array structure 500 comprises a plurality of gate lines 540, a plurality of data lines 550, a plurality of readout lines 560, and a plurality of pixel areas Ra. Each of the plurality of pixel areas Ra is enclosed by adjacent gate lines 540 and adjacent data lines 550 correspondingly. Each of the plurality of pixel areas Ra comprises a switching element 510, a display-region storage capacitor Cst and a liquid crystal capacitor Clc.

Some of the plurality of pixel areas Ra further comprise an inducing element 520 and a readout element 530. Each of the plurality of gate lines 540 is a conductive line used for conducting a gate voltage. The readout element 530 is a PMOS transistor, an NMOS transistor, a diode, or a thin film transistor. The inducing signal generated by the inducing element 520 can be transferred to the corresponding readout line 560 via the corresponding readout element 530. The gate electrode G of a switching element 510 and the source electrode S of a corresponding inducing element 520 in the same pixel area Ra are electrically connected to different gate lines 540 respectively.

When the gate electrode G of an inducing element 520 is furnished with a negative voltage so that the inducing element 520 is not selected to be active for inducing, the corresponding readout element 530 coupled to the inducing element 520 is utilized to filter noise generated from the inducing element 520. For instance, an undesirable inducing signal caused by ambient light may come out from the inducing element 520, and the undesirable inducing signal can be filtered by the readout element 530. Both the readout element 530 and the readout line 560 are optional elements.

That is, the data line 550 may be electrically connected to the inducing element 520 directly and function to act as a readout line.

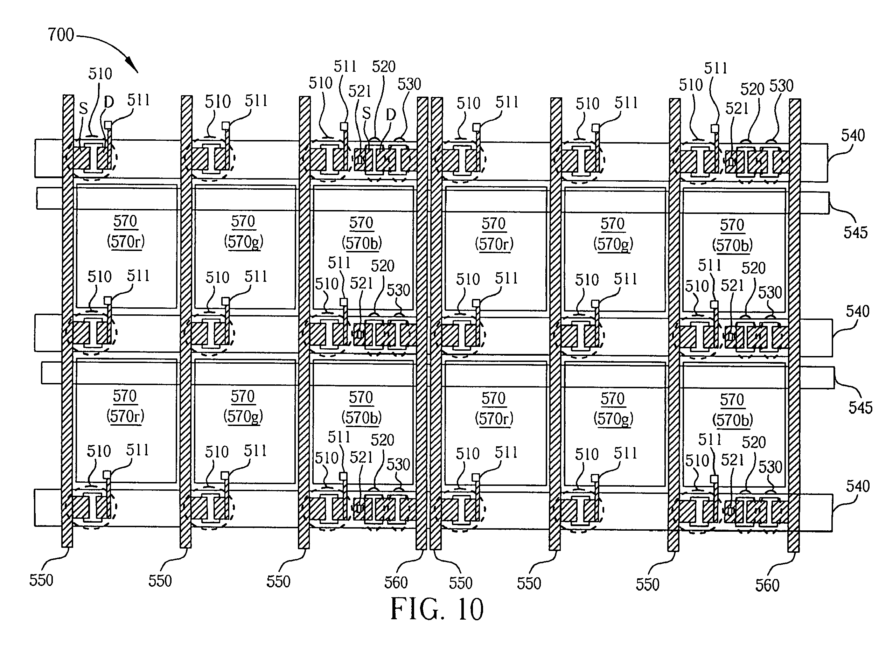

Please refer to Fig. 10, which is a layout diagram schematically showing a panel structure according to the present invention. The panel structure 700 comprises a plurality of gate lines 540, a plurality of common electrode lines 545, a plurality of data lines 550, a plurality of readout lines 560, a plurality of pixel electrodes 570, a plurality of switching elements 510, a plurality of inducing elements 520, and a plurality of readout elements 530 disposed on a substrate. The panel structure 700 further comprises a plurality of color elements CF disposed on a counter substrate. The plurality of color elements CF comprises a plurality of red elements 570r, a plurality of green element 570g, and a plurality of blue elements 570b. The plurality of color elements CF may further comprise a plurality of white elements. The inducing elements 520 can be disposed on the pixel areas corresponding to individuals of the red elements 570r, the green elements 570g, the blue elements 570b, the white elements, or the composite thereof. In a preferred embodiment, the inducing elements 520 are disposed on the pixel areas corresponding to the blue elements 570b. The drain electrode D of the switching element 510 is electrically connected to the corresponding pixel electrode 570 through a first via hole 511. The source electrode S of the inducing element 520 is electrically connected to the corresponding gate line 540 through a second via hole 521.

Please refer to Fig. 1 1 , which is a schematic diagram showing a pixel unit according to the present invention. The area shielded by the shielding element 380 covers the inducing element 520, the readout element 530, and the switching element 510. The blue element 570b disposed on the counter substrate corresponds to the pixel electrode 570 disposed on the substrate. The structure of the inducing unit 300 shown in Fig. 1 is the cross-sectional diagram taken along line 1-1' in Fig. 1 1 .

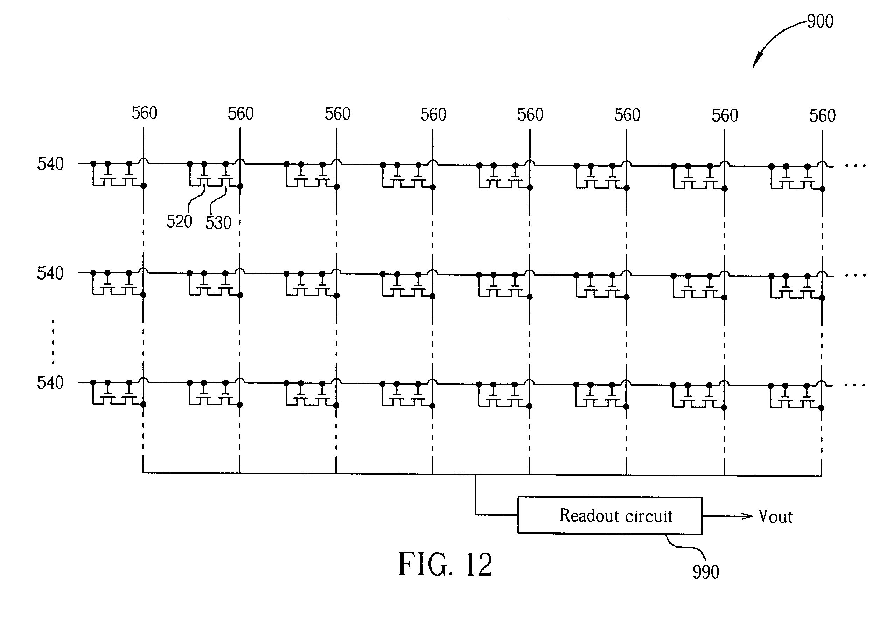

Please refer to Fig. 12, which is a circuit diagram schematically showing an inducing circuit according to the present invention. Please note that some elements of the circuit such as the data lines, common electrode lines, switching elements, and pixel electrodes are omitted in Fig. 12 for the sake of demonstrating the inducing circuit 900 clearly. The inducing circuit 900 comprises a plurality of inducing elements 520, a plurality of readout elements 530, a plurality of gate lines 540, a plurality of readout lines 560, and a readout circuit 990.

The inducing element 520 and the readout element 530 are not necessary to be disposed for each of the plurality of gate lines 540. That is, the inducing element 520 and the readout element 530 can be disposed to the gate lines separated by at least one gate line without the inducing element 520 and the readout element 530 disposed. Besides, the readout circuit 990 can be electrically connected to at least one readout line. For instance, the readout circuit 990 in Fig. 12 is electrically connected to eight readout lines 560, and the inducing signals furnished to the readout circuit 990 from the eight readout lines 560 can be converted to a readout signal Vout. The readout signal Vout is then analyzed or compared with the background signal for positioning the touched position.

Please refer to Fig. 13, which is a circuit diagram schematically showing an array structure according to the present invention. The gate electrode G of a switching element 510 and the source electrode S of a corresponding inducing element 520 in the same pixel area Ra are electrically connected to the same gate line 540. The other circuit connections concerning the array structure 585 are the same as the circuit connections concerning the array structure 500 shown in Fig. 9, and for the sake of brevity, further discussion on the other circuit connections concerning the array structure 585 is omitted.

Please refer to Fig. 14, which is a circuit diagram schematically showing an array structure according to the present invention. The source electrode S of the inducing element 520 is electrically connected to an independent voltage source 597 through a corresponding power line 596. That is, the gate electrode G and source electrode S of the inducing element 520 in Fig. 14 are driven by a signal voltage from the gate line 540 and a power voltage from the independent voltage source 597 respectively, which means that the inducing signal can be adjusted independently.

Please refer to Fig. 15, which is a circuit diagram schematically showing an array structure according to the present invention. The gate electrode G of the inducing element 520 in Fig. 15 is electrically connected to a selection line 542. The selection lines 542 are conductive lines coupled to an independent power source, so as to provide selection signals for enabling the inducing element 520 being selected for inducing.

Based on the aforementioned panel structure, a related positioning method is disclosed for a display device. The display device comprises a counter electrode, an inducing element, and a readout circuit. The positioning method comprises the following steps:

Step S10:    touch the display device in a position;
Step S20:    change a gap between the counter electrode and the inducing element for modulating a conductivity of the inducing element to a modulated conductivity of the inducing element corresponding to the position;
Step S30:    generate an inducing signal based on the modulated conductivity of the inducing element;
Step S40:    furnish the inducing signal to the readout circuit; and
Step S50:    analyze the inducing signal for positioning the touched position.

The positioning method described above may comprise generating an electric field for affecting the inducing element based on a voltage of the counter electrode. The electric field is dependent on the voltage and the gap. That is, the conductivity of the inducing element corresponding to the touched position can be modulated in response to the intensity of the electric field dependent on the gap between the counter electrode and the inducing element in the touched position.

The positioning method described above may further comprise the steps of providing a shielding element to shield the inducing element from ambient light, providing a readout element to filter noise generated from the inducing element, and generating a background signal based on the conductivity of the inducing element prior to touching the display device in the position.

Accordingly, the step S50 may comprise comparing the inducing signal with the background signal for positioning the touched position. Besides, the step S40 may comprise furnishing the inducing signal to the readout circuit for converting the inducing signal into a readout signal, and the step S50 may comprise analyzing the readout signal or comparing the readout signal with the background signal for positioning the touched position.

In order to describe the positioning method for a display device more clearly, please refer to Fig. 16, which is a flowchart showing a positioning method for a display device according to the present invention. As shown in Fig. 1 6, a flow of a positioning method for a display device comprises the following steps:

Step S60:     providing a storage capacitor, and furnishing a first charge to the storage capacitor;

Step S70:     providing an inducing element electrically connected to the storage capacitor and disposed at a position;

Step S80:     providing a counter electrode disposed above the inducing element, wherein a first gap is between the inducing element and the counter electrode, and a first drain current is generated to modulate the first charge to a second charge;

Step S90:     touching the position, and changing the first gap into a second gap to modulate the first drain current to a second drain current and modulate the first charge to a third charge; and

Step S100:    comparing the second charge with the third charge for positioning the position.

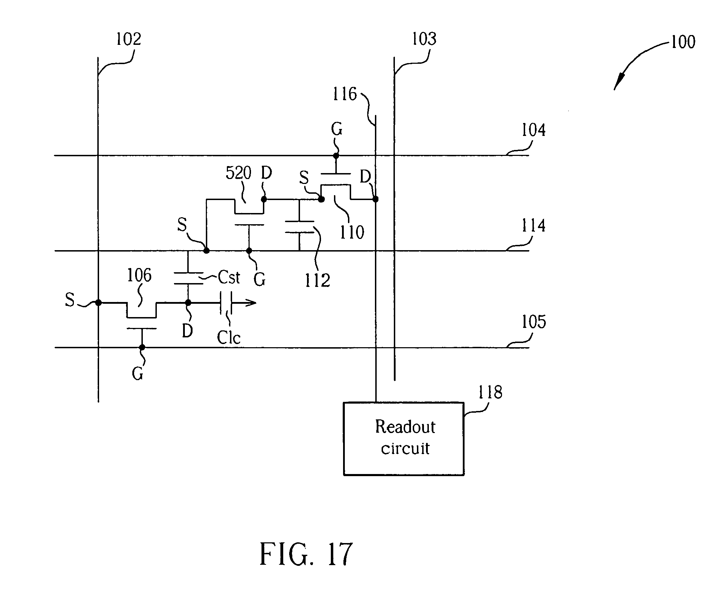

Please refer to Fig. 17, and also refer to Fig. 1 6. Fig. 17 is a circuit diagram schematically showing a pixel region of the display device according to the present invention. As shown in Fig. 17, the display device includes a plurality of pixel regions 100, and each pixel region is defined by two data lines 102, 103 and two gate lines 104, 105. The pixel region 100 includes a switching element 106, a display-region storage capacitor Cst and a liquid crystal capacitor Clc. A part of the pixel region 100 further comprises an inducing element 520, a readout element 110, a storage capacitor 112 and a bias electrode 1 14. As shown in Figs. 16 and 17, in the flow of the above-mentioned positioning method of Fig.16, step S60 not only provides a storage capacitor 112, but also further comprises providing the readout element 110, a readout line 116 and a readout circuit 118. A first end of the storage capacitor 1 1 2 is electrically connected to a source electrode S of the readout element 110. A gate electrode G of the readout element 1 10 is electrically connected to a gate line 104, and a drain electrode D of the readout element 110 is electrically connected to the readout circuit 118 through the readout line 116. Furthermore, a gate driving signal is provided to the gate electrode G of the readout element 110 through the gate line 104 so as to make the readout element 110 have conductivity. Therefore, the readout circuit 118 can furnish charges to the storage capacitor 112 or read the charge of the storage capacitor 112.

Please refer to Figs. 1 , 16 and 17. The step S70 provides an inducing element 520 disposed on a side of a substrate 301 facing the counter substrate 302. The inducing element 520 is positioned at a position and electrically connected to the storage capacitor (not shown in figure), and a first charge is furnished to the storage capacitor. The gate electrode G and the source electrode S of the inducing element 520 are electrically connected to a second end of the storage capacitor 112, and the drain electrode D of the inducing element 520 is electrically connected to a first end of the storage capacitor 112. The gate electrode G and the source electrode S of the inducing element 520 and the second end of the storage capacitor 1 12 are electrically connected to a bias electrode 1 14, and a bias is provided to the bias electrode 114. It should be noted that the bias electrode 114 also can be a common electrode in a pixel region 100, so that the bias electrode 114 can be electrically connected to a counter electrode 1 24. The step S80 provides a counter electrode 390 disposed above the inducing element 520. A first gap d1 is a distance between the inducing element 520 and the counter electrode 390, and the inducing element 520 can generate a first drain current to modulate the first charge into a second charge in the condition without touching the position. A light-shielding layer 380 can be further provided before the step S90 so as to prevent interference to the inducing element 520 from environment light. Or, opaque metal also can be utilized to manufacture the counter electrode 390 so as to have the effect of shielding the environment light. Without touching the position, the second charge is defined to be a background signal according to the conductivity of the inducing element 520. The light-shielding layer 380 is disposed between the counter electrode 390 and the counter substrate 302.

Please refer to Figs. 2 and 16. The step S90 touches the position so as to reduce the first gap d1 to a second gap d2. Because the gap between the counter electrode 390 and the inducing element 520 is reduced, the affect of the voltage of the counter electrode 390 on the conductivity of the inducing element 520 is increased. This means that when the counter electrode 390 is close to the inducing element 520, the voltage of the counter electrode 390 generates an inducing electric field for the channel 315 of the inducing element 520 so as to make electrons in the channel 31 5 be affected by the inducing electric field. Therefore, the first drain current can be modulated into a second drain current, and the second drain current is utilized to modulate the first charge to a third charge.

The inducing element 520 is electrically connected to the storage capacitor 112, and the drain current of the inducing element 520 is modulated from the first drain current into the second drain current, so that the second drain current can be utilized to modulate the first charge originally in the storage capacitor 1 1 2 to a third charge. Therefore, while touching the position, the third charge can be defined as an inducing signal according to the conductivity of the inducing element 520. The inducing signal is further transferred to the readout circuit 118 through the readout element 110 and the readout line 116 before the step S100. In the step S100, the readout circuit 118 can be therefore utilized to compare the difference between the second charge and the third charge. That is, analyzing the inducing signal or comparing the difference between the inducing signal and the background signal so as to define the position.

Please refer to Fig. 18, which is a relationship diagram illustrating the gate voltage with respect to the drain current in fixing the drain voltage of the inducing element according to the present invention. The present invention compares five different gap sizes, which respectively are 1 $\mu$m, 0.75 $\mu$m, 0.5 $\mu$m, 0.25 $\mu$m and 0 $\mu$m. Different gap sizes can represent different degrees of touching strength. As shown in Fig. 18, when the gap is 1 $\mu$m, the drain current is the smallest. When the gap is 0 $\mu$m, the drain current is the largest. The smaller the gap is, the larger the drain current is. The variation of the drain current can be utilized to modulate the charge of the storage capacitor. Therefore, the present invention can utilize the readout circuit to compare the difference between the charges in the storage capacitor before touching and after touching to define the touching position. It should be noted that the inducing element of the present invention has a preferred operating condition. The operating condition is that the gate voltage of the inducing element is smaller than the drain voltage of the inducing element. The drain current is changed along with the size of the gap. The readout circuit can tell the charge variation of the storage capacitor caused by the change of the drain current so as to define the touching position.

Please refer to Fig. 19, which is a schematic diagram illustrating a pixel region circuit of the display device according to another embodiment of the present invention. As shown in Fig. 19, compared to the circuit of Fig. 17, the source electrode S of the inducing element 520 is changed to be connected to a drive line 140, which is utilized to modulate the bias of the inducing element 520 to make the inducing element 520 operate in best sensitivity. The second end of the storage capacitor 112 is electrically connected to the bias electrode 1 14, and the first end of the storage capacitor 112 is electrically connected to the drain electrode D of the inducing element 520.

**Preferred Features of the Invention**

Clause 1. A display device comprising:

a substrate comprising a pixel electrode and a first conductive line;
a data line crossing the first conductive line and disposed on the substrate;
an inducing element electrically connected to the first conductive line and disconnected with the pixel electrode; and
a shielding element corresponding to the inducing element.

Clause 2. The display device of clause 1 , further comprising:

a readout circuit; and
a readout line crossing the first conductive line and electrically connected to the inducing element and the readout circuit.

Clause 3. The display device of clause 1, further comprising:

a readout element electrically connected to the inducing element.

Clause 4. The display device of clause 1 , further comprising:

a switching element electrically connected to the data line, the first conductive line, and the pixel electrode.

Clause 5. The display device of clause 1, further comprising:

a readout circuit electrically connected to the data line and the inducing element.

Clause 6. The display device of clause 1, further comprising:

a counter substrate facing to the substrate; and
a counter electrode disposing between the inducing element and the counter substrate.

Clause 7. A display device, comprising:

a substrate comprising a pixel electrode and a first conductive line;
a counter substrate corresponding to the substrate;
an inducing element, disposed on the substrate, having a passivation layer, and electrically connected to the first conductive line and disconnected with the pixel electrode; and
a counter electrode disposed between the substrate and the counter substrate, corresponding to the inducing element;
wherein a variable gap is between the passivation layer and the counter electrode, and the variable gap less or equal to 1$\mu$m.

Clause 8. The display device of clause 7, further comprising a protrusion disposed between the counter electrode and the counter substrate.

9. The display device of clause 8, wherein the protrusion comprises a filter material.

Clause 10. The display device of clause 9, wherein the filter material is a color resist layer.

Clause 11. The display device of clause 8, wherein the protrusion comprises a light-shielding material.

Clause 12. The display device of clause 1 1 , wherein the light-shielding material is a metal layer.

Clause 13. The display device of clause 8, wherein the protrusion comprises a transparent material.

Clause 14. The display device of clause 7, wherein the first conductive line is a gate line.

Clause 1 5. The display device of clause 7, further comprising a second conductive line crossing the first conductive line.

Clause 16. The display device of clause 15, wherein the second conductive line is a data line.

Clause 17. The display device of clause 16, further comprising a switch element electrically connected to the first conductive line, the data line, and the pixel electrode.

Clause 18. A display device, comprising:

a substrate and a counter substrate corresponding to each other, wherein the substrate comprises a pixel electrode and a first conductive line;
an inducing element having a passivation layer, and electrically connected to the first conductive line and disconnected with the pixel electrode;
a counter electrode corresponding to the inducing element; and
a protrusion disposed between the counter electrode and the counter substrate.

Clause 19. The display device of clause 18, wherein the protrusion comprises a filter material.

Clause 20. The display device of clause 19, wherein the filter material is a color resist layer.

Clause 21. The display device of clause 18, wherein the protrusion comprises a light-shielding material.

Clause 22. The display device of clause 21, wherein the light-shielding material is a metal layer.

Clause 23. The display device of clause 18, wherein the protrusion comprises a transparent material.

Clause 24. The display device of clause 18, further comprising a switch element electrically connected to the first conductive line, the data line, and the pixel electrode.

Clause 25. The display device of clause 18, wherein a variable gap is between the passivation layer and the counter electrode, and the variable gap less or equal to $2\mu$m.

Clause 26. A positioning method for a display device, the display device comprising a counter electrode, an inducing element, and a readout circuit, the positioning method comprising:

 touching the display device in a position;
 changing a gap between the counter electrode and the inducing element;
 modulating a conductivity of the inducing element to a modulated conductivity of the inducing element corresponding to the position;
 generating an inducing signal based on the modulated conductivity of the inducing element; and
 furnishing the inducing signal to the readout circuit.

Clause 27. The positioning method of clause 26, further comprising:

 analyzing the inducing signal for positioning the position.

Clause 28. The positioning method of clause 26, further comprising:

 furnishing a voltage to the counter electrode;
 generating an electric field by the voltage, wherein an intensity of the electric field is dependent on the voltage and the gap; and
 affecting the conductivity of the inducing element by the electric field.

Clause 29. The positioning method of clause 26, further comprising:

 generating a background signal based on the conductivity of the inducting element prior to touching the display device in the position; and
 comparing the inducing signal with the background signal for positioning the position.

Clause 30. The positioning method of clause 26, further comprising:

 converting the inducing signal into a readout signal by the readout circuit; and
 analyzing the readout signal for positioning the position.

Clause 31. The positioning method of clause 26, further comprising:

 converting the inducing signal into a readout signal by the readout circuit; and
 comparing the readout signal with the background signal for positioning the position.

Clause 32. The positioning method of clause 26, further comprising:

 providing a readout element for filtering noise generated by the inducing element.

Clause 33. The positioning method of clause 26, further comprising:

 providing a shielding element for shielding the inducing element from ambient light.

Clause 34. A positioning method for a display device, comprising:

 providing a storage capacitor, and furnishing a first charge to the storage capacitor;

providing an inducing element electrically connected to the storage capacitor and disposed at a position;
providing a counter electrode disposed above the inducing element, wherein a first gap is between the inducing element and the counter electrode, and a first drain current is generated to modulate the first charge to a second charge;
touching the position, and changing the first gap into a second gap to modulate the first drain current to a second drain current and modulate the first charge to a third charge; and
comparing the second charge with the third charge for positioning the position.

Clause 35. The positioning method of clause 34, further comprising defining the second charge as a background signal.

Clause 36. The positioning method of clause 34, further comprising defining the third charge as an inducing signal.

Clause 37. The positioning method of clause 34, further comprising providing a readout circuit to furnish the first charge to the storage capacitor.

Clause 38. The positioning method of clause 37, further comprising providing a readout element, and a drain electrode of the readout element electrically connected to the readout circuit.

Clause 39. The positioning method of clause 38, wherein a source electrode of the readout element is electrically connected to a first end of the storage capacitor.

Clause 40. The positioning method of clause 39, wherein a gate electrode of the readout element is electrically connected to a gate line.

Clause 41. The positioning method of clause 38, further comprising utilizing the readout element to make the readout circuit read the second charge or the third charge through the storage capacitor.

Clause 42. The positioning method of clause 37, further comprising utilizing the readout circuit to compare the second charge with the third charge for positioning the position.

Clause 43. The positioning method of clause 34, further comprising providing a bias electrode electrically connected to a second end of the storage capacitor.

Clause 44. The positioning method of clause 43, further comprising electrically connecting the bias electrode to a source electrode of the inducing element.

Clause 45. The positioning method of clause 43, further comprising electrically connecting the bias electrode to a gate electrode of the inducing element.

Clause 46. The positioning method of clause 43, further comprising electrically connecting the first end of the storage capacitor to a drain electrode of the inducing element.

Clause 47. The positioning method of clause 46, further comprising providing a drain voltage to the drain electrode of the inducing element and providing a bias to the bias electrode.

Clause 48. The positioning method of clause 47, wherein the drain voltage is larger than the bias.

Clause 49. The positioning method of clause 43, further comprising electrically connecting the counter electrode and the bias electrode.

Clause 50. The positioning method of clause 34, wherein the first drain current and the second drain current are current passing through a drain electrode of the inducing element.

Clause 51. The positioning method of clause 34, further comprising providing a drive line for changing a bias on the inducing element.

Clause 52. The positioning method of clause 51, wherein the drive line is electrically connected to a source electrode of the inducing element.

The invention can be summarized as a display device detecting a touched position by making use of an inducing element and a counter electrode. The voltage produced by the counter electrode is able to affect a conductivity of the channel of the inducing element corresponding to the touched position. The inducing element and a readout circuit are disposed on a substrate of the display device. The counter electrode and a shielding element are both corresponded to the inducing element. The channel of the inducing element corresponding to the touched position changes the conductivity due to the voltage produced by the corresponding counter electrode, and an inducing signal is then generated. The inducing signal is furnished to the readout circuit for signal processing, and a readout signal is generated for analyzing the touched position.

All combinations and sub-combinations of the above-described features also belong to the invention.

**Claims**

1.  A display device, **characterized by**:

    a substrate (126, 301, 402, 604) comprising a pixel electrode (570) and a gate line (104, 105, 540);
    a data line (102, 103, 5 50) crossing the gate line (104, 105, 540) and disposed on the substrate (126, 301 , 402, 604);
    an inducing element (520), disposed on the substrate (126, 301 , 402, 604), electrically connected to the gate line (1 04, 105, 540) and disconnected with the pixel electrode (570); and
    a shielding element (380) corresponding to the inducing element (, 520).

2.  The display device of claim 1, further **characterized by**:

    a readout circuit (118, 990); and
    a readout line (116, 560) crossing the gate line (104, 105, 540) and electrically connected to the inducing element (, 520) and the readout circuit (118, 990).

3.  The display device of claim 1, further **characterized by**:

    a readout element (110, 530) electrically connected to the inducing element (520).

4.  The display device of claim 3, further **characterized by**:

    a storage capacitor (112) connected between a source electrode (S) of the readout element (110, 530) and a gate electrode (G) of the inducing element (, 520).

5.  The display device of claim 1 , further **characterized by**:

    a gate electrode (G) of the inducing element (520)is electrically connected to a independent power source(597)

6.  The display device of claim 1 , further **characterized by**:

    a switching element (106, 510) electrically connected to the data line (102, 103, 550), the gate line (104, 105, 540), and the pixel electrode (570).

7.  The display device of claim 1 , further **characterized by**:

    a readout circuit (1 1 8, 990) electrically connected to the data line (102, 103, 550) and the inducing element(520).

8.  The display device of claim 1 , further **characterized by**:

    a drive line (140,114) is electrically connected to a source electrode (S) of the inducing element (520)

9.  The display device of claim 1 , further **characterized by**:

a counter substrate (122, 302, 408, 622) corresponding to the substrate (126, 301 , 402, 604); and
a counter electrode (124, 390, 406, 620) disposing between the inducing element (520) and the counter substrate (1 22, 302, 408, 622).

10. The display device of claim 9, wherein the inducing element (520) has a passivation layer (360, 404, 634), and **characterized in that** a variable gap is between the passivation layer (360, 404, 634) and the counter electrode (1 24, 390, 406, 620), and the variable gap less or equal to 2µm.

11. The display device of claims 9 or 1 0, further **characterized by** a protrusion (410, 624, 710, 802) disposed between the counter electrode (124, 390, 406, 620) and the counter substrate (122, 302, 408, 622).

12. A positioning method for a display device, the display device comprising a counter electrode (124, 390, 406, 620), an inducing element (520), and a readout circuit (1 18, 990), the positioning method **characterized by**:

touching the display device in a position;
changing a gap between the counter electrode (1 24, 390, 406, 620) and the inducing element (520) to modulate a conductivity of the inducing element (520) to a modulated conductivity of the inducing element (520) corresponding to the position;
generating an inducing signal based on the modulated conductivity of the inducing element (520); and
furnishing the inducing signal to the readout circuit (118, 990).

13. The positioning method of claim 1 2, further **characterized by**:

generating a background signal based on the conductivity of the inducing element (520) before touching the display device in the position; and
comparing the inducing signal with the background signal for positioning the position.

14. The positioning method of claim 1 2, further **characterized by**:

providing a storage capacitor (112), and furnishing a first charge to the storage capacitor (112);
providing the inducing element (520) electrically connected to the storage capacitor (112) and disposed at the position;
providing the counter electrode (124, 390, 406, 620) disposed above the inducing element (520), wherein when the gap is a first gap (d1), a first drain current of the inducing element (520) is generated to modulate the first charge to a second charge defined as the background signal; and
changing the first gap (d1) into a second gap (d2) to modulate the first drain current to a second drain current and modulate the first charge to a third charge defined as the inducing signal.

15. The positioning method of claim 13 or 14, further
**characterized by**:

comparing the inducing signal with the background signal for positioning the position by the readout circuit (118, 990).

FIG. 1

FIG. 2

FIG. 3

EP 2 056 187 A2

FIG. 4

FIG. 5

FIG. 6

EP 2 056 187 A2

FIG. 7

FIG. 8

FIG. 9

EP 2 056 187 A2

FIG. 10

EP 2 056 187 A2

FIG. 11

FIG. 12

EP 2 056 187 A2

FIG. 13

FIG. 14

EP 2 056 187 A2

FIG. 15

EP 2 056 187 A2

Providing a storage capacitor, and furnishing a first charge to the storage capacitor ⎯ S60

Providing an inducing element electrically connected to the storage capacitor and disposed at a position ⎯ S70

Providing a counter electrode disposed above the inducing element, wherein a first gap is between the inducing element and the counter electrode, and a first drain current is generated to modulate the first charge to a second charge ⎯ S80

Touching the position, and changing the first gap into a second gap to modulate the first drain current to a second drain current and modulate the first charge to a third charge ⎯ S90

Comparing the second charge with the third charge for positioning the position ⎯ S100

FIG. 16

EP 2 056 187 A2

FIG. 17

FIG. 18

EP 2 056 187 A2

FIG. 19